# EUROPEAN PATENT APPLICATION

(11) **EP 4 567 836 A1**
(43) Date of publication of application: **11.06.2025**
(21) Application number: 23849823.2
(22) Date of filing: 06.07.2023
(51) Int. Cl.: H01B 1/08, C01G 25/00, H01B 1/06, H01G 11/06, H01G 11/56, H01M 10/052, H01M 10/0562

(54) **OXIDE, ELECTROLYTE COMPOSITION, AND POWER STORAGE DEVICE**

(30) Priority: 03.08.2022 JP 2022123674
(71) Applicant: Niterra Co., Ltd., Nagoya-shi, Aichi 461-0005 (JP)
(72) Inventor: KANEKO Masahide, Nagoya-shi, Aichi 461-0005 (JP); TAKEUCHI Yuki, Nagoya-shi, Aichi 461-0005 (JP); HISHIDA Tomoko, Nagoya-shi, Aichi 461-0005 (JP); HIKOSAKA Hideaki, Nagoya-shi, Aichi 461-0005 (JP)
(74) Representative: Grünecker Patent- und Rechtsanwälte PartG mbB
(86) International application number: PCT/JP2023/025093
(87) International publication number: WO 2024/029264

(57) **Abstract**

Provided are an oxide, an electrolyte composition, and a power storage device, all of which can be manufactured by simple methods. The oxide has a garnet-type crystal structure containing Li, La, and Zr, and the crystal structure has at least two tetragonal crystal phases that are different in lattice constant. The crystal structure belongs to a space group I41/acd, and the occupancy proportion of Li at an 8a site in at least one of the tetragonal crystal phases may be 95% or less. The oxide may contain Sr. The electrolyte composition and the power storage device contain said oxide.

## Description

### TECHNICAL FIELD

The present invention relates to an oxide which has a gamet-type crystal structure including Li, Zr, and La, to an electrolyte composition, and to a power storage device.

### BACKGROUND ART

Generally, an oxide which has a garnet-type crystal structure including Li, Zr, and La exhibits high chemical stability and a lithium ion-conductive property. For example, Li₇La₃Zr₂O₁₂ (hereinafter referred to as "LLZ") is an oxide which is stable with respect to metallic lithium and, theoretically, exhibits a high ion conductivity of 10⁻⁴ S/cm to 10⁻³ S/cm at room temperature. The crystal structure of LLZ mainly includes a cubic system and a tetragonal system. In LLZ, a tetragonal phase exhibiting a low ion-conductive property is stable at room temperature, and changes at high temperature to a cubic phase exhibiting an ion conductivity of 10⁻⁴ S/cm or higher. According to related art disclosed in Patent Document 1, a particular element forming LLZ is substituted by another element, to thereby stabilize a cubic phase, in order to produce an oxide exhibiting high ion-conductive property at room temperature.

### CITATION LIST

### PATENT LITERATURE

Patent Literature 1: JP2016-40767A

### SUMMARY OF INVENTION

### TECHNICAL PROBLEM

In the related art, preparation of raw material and the firing method for producing the oxide must be rigorously controlled so as to stabilize the cubic system.

The present invention has been conceived so as to solve the above problem. Thus, an object of the invention is to provide an oxide that can be produced through an easy method, an electrolyte composition, and a power storage device.

### SOLUTION TO PROBLEM

In a first aspect of the invention to attain the object, there is provided an oxide which has a garnet-type crystal structure including Li, La, and Zr, in which the crystal structure includes at least two tetragonal phases having different lattice constants.

A second aspect is a specific embodiment of the oxide of the first aspect, in which the crystal structure belongs to a space group I4₁/acd, and at least one of the tetragonal phases has a percent Li occupancy of 8a sites of 95% or less.

A third aspect is a specific embodiment of the oxide of the first or second aspect, which oxide further contains Sr.

A fourth aspect of the invention is directed to an electrolyte composition containing an oxide as recited in any of the first to third aspects.

In a fifth aspect of the invention, there is provided a power storage device which has a plurality of electrode layers and a separator isolating the plurality of electrode layers, in which at least one of the plurality of electrode layers and the separator contains an oxide as recited in any of the first to third aspects.

In a sixth aspect of the invention, there is provided a power storage device which has a plurality of electrode layers including a current-collecting layer, and a separator isolating the plurality of electrode layers. The power storage device has a protective layer provided between any of the electrode layers and the separator or on the current-collecting layer, and the protective layer contains an oxide as recited in any of the first to third aspects.

### ADVANTAGEOUS EFFECTS OF INVENTION

According to the oxide, electrolyte composition, and power storage device of the present invention, an easy production method can be realized.

### BRIEF DESCRIPTION OF DRAWINGS

[FIG. 1] A cross-section of a power storage device of a first embodiment.
[FIG. 2] A schematic view of a crystal structure of conventional tetragonal LLZ.
[FIG. 3] A schematic view of coordination of Li in one crystal plane of conventional tetragonal LLZ.
[FIG. 4] A schematic view of coordination of Li in one crystal plane of the oxide of the invention.
[FIG. 5] A cross-section of a power storage device of a second embodiment.
[FIG. 6] A cross-section of a power storage device of a third embodiment.

### DESCRIPTION OF EMBODIMENTS

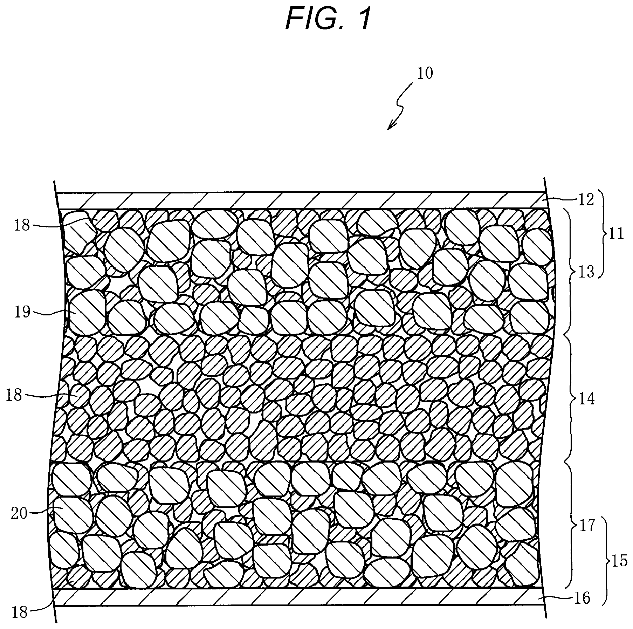

Hereinafter, a preferred embodiment of the present invention will be described with reference to attached drawings. FIG. 1 is a schematic cross-section of a power storage device 10 of the first embodiment. The power storage device 10 of the present embodiment corresponds to a lithium ion solid battery (secondary battery) in which power generating elements are formed of a solid material. The expression "a power generating element is formed of a solid material" refers to a case in which a main body of the power generating element is formed of a solid material, and also encompasses an embodiment in which the main body has been impregnated with liquid.

The power storage device 10 includes, from top to bottom, a positive electrode layer 11, an electrolyte layer 14, and a negative electrode layer 15. The positive electrode layer 11, the electrolyte layer 14, and the negative electrode layer 15 are built in a case (not illustrated).

The positive electrode layer 11 includes a current-collecting layer 12 and an active material layer 13 stacked thereon. The current-collecting layer 12 is a member having an electrical conductivity. Examples of the material of the current-collecting layer 12 include metals selected from among Ni, Ti, Fe, and Al; alloys each containing two or more of such metals; stainless steel; and carbon material.

The active material layer 13 contains an active material 19 and an electrolyte composition containing an oxide 18. For lowering the resistance of the active material layer 13, the active material layer 13 may contain a conducting aid. Examples of the conducting aid include carbon black, acetylene black, Ketjen black, carbon fiber, Ni, Pt, and Ag.

Examples of the active material 19 include a metal oxide in which the metal includes a transition metal, a sulfur-containing active material, and an organic active material. Examples of the metal oxide in which the metal includes a transition metal include a metal oxide in which the metal includes Li and at least one element selected from among Mn, Co, Ni, Fe, Cr, and V. Specific examples of the metal oxide in which the metal includes a transition metal include LiCoO₂, LiNi_{0.8}Co_{0.15}Al_{0.05}O₂, LiMn₂O₄, LiNiVO₄, LiNi_{0.5}Mn_{1.5}O₄, LiNi_{1/3}Mn_{1/3}Co_{1/3}O_{4,} and LiFePO₄.

In order to suppress reaction between the active material 19 and the oxide 18, a coating layer may be provided on the active material 19. Examples of the coating layer include Al₂O₃, ZrO₂, LiNbO₃, Li₄Ti₅O₁₂, LiTaO₃, LiNbO₃, LiAlO₂, Li₂ZrO₃, Li₂WO₄, Li₂TiO₃, Li₂B₄O₇, Li₃PO₄, and Li₂MoO₄.

Examples of the sulfur-containing active material include S, TiS₂, NiS, FeS₂, Li₂S, MoS₃, and a sulfur-carbon composite. Examples of the organic active material include radical compounds such as 2,2,6,6-tetramethylpiperidinoxyl-4-yl methacrylate and polytetramethylpiperidinoxyl vinyl ether; quinone compounds; radialene compounds; tetracyanoxydimethane; and phenazine oxide.

The electrolyte layer 14 is formed of an electrolyte composition containing the oxide 18. The electrolyte layer 14 serves as a separator which isolates the positive electrode layer 11 from the negative electrode layer 15, to thereby achieve electrical insulation. The electrolyte layer 14 may contain an electrolytic solution in which an electrolyte salt is dissolved in a solvent, or a binder. No particular limitation is imposed on the solvent of the electrolytic solution, so long as the solvent can dissolve the electrolyte salt. Examples of the solvent include a carbonate ester, an aliphatic carboxylate ester, a phosphate ester, a γ-lactone, an ether, a nitrile, a sulfolane, dimethyl sulfoxide, a fluorous solvent, and an ionic liquid. A mixture thereof may also be employed.

No particular limitation is imposed on the binder, so long as the binder can bind the oxide 18. Examples of the binder include a fluororesin, polyolefin, polyimide, polyvinylpyrrolidone, poly(vinyl alcohol), cellulose ether, and rubber polymer such as styrene-butadiene rubber. Examples of the fluororesin include vinylidene fluoride-based polymer, poly(chlorotrifluoroethylene), poly(vinyl fluoride), tetrafluoroethyleneperfluoroalkyl vinyl ether copolymer, tetrafluoroethylene-hexafluoropropylene copolymer, ethylene-tetrafluoroethylene copolymer, and ethylene-chlorotrifluoroethylene copolymer.

The negative electrode layer 15 includes a current-collecting layer 16 and an active material layer 17 stacked thereon. The current-collecting layer 16 is a member having an electrical conductivity. Examples of the material of the current-collecting layer 16 include metals selected from among Ni, Ti, Fe, Cu, and Si; alloys each containing two or more of such metals; stainless steel; and carbon material.

The active material layer 17 is formed of the active material 20 and the electrolyte composition containing the oxide 18. In order to lower the resistance of the active material layer 17, the active material layer 17 may contain a conducting aid. Examples of the conducting aid include carbon black, acetylene black, Ketjen black, carbon fiber, Ni, Pt, and Ag. Examples of the active material 20 include Li, Li-Al alloy, Li₄Ti₅O₁₂, graphite, In, Si, Si-Li alloy, and SiO. Similar to the electrolyte layer 14, the active material layers 13, 17 may contain an electrolytic solution or a binder.

The power storage device 10 is fabricated through, for example, the following procedure. The fabrication will be described, taking as an example the case in which the power storage device 10 contains an electrolytic solution and a binder. A lithium salt is dissolved in an organic solvent, and the resultant solution is mixed with the oxide 18. To the resultant mixture, a solution formed by dissolving a binder in a solvent is added, to thereby yield a slurry. The slurry is formed into a tape, which is then dried to form a green sheet (electrolyte sheet) for providing the electrolyte layer 14.

Separately, a lithium salt is dissolved in an organic solvent, and the resultant solution is mixed with the oxide 18. To the resultant mixture, an active material 19 and a solution formed by dissolving a binder in a solvent are sequentially added, to thereby yield a slurry. The slurry is formed into a tape on the current-collecting layer 12, and the tape is then dried to form a green sheet (positive electrode sheet) for providing the positive electrode layer 11.

Yet separately, a lithium salt is dissolved in an organic solvent, and the resultant solution is mixed with the oxide 18. To the resultant mixture, an active material 20 and a solution formed by dissolving a binder in a solvent are sequentially added, to thereby yield a slurry. The slurry is formed into a tape on the current-collecting layer 16, and the tape is then dried to form a green sheet (negative electrode sheet) for providing the negative electrode layer 15.

The electrolyte sheet, the positive electrode sheet, and the negative electrode sheet are cut into a shape of interest. The cut products thereof are stacked from the positive electrode sheet, the electrolyte sheet, and the negative electrode sheet in that order, and the stacked product is pressed to integrate the sheets. To each of the current-collecting layers 12, 16, a terminal (not illustrated) is connected, and the product is built in a case (not illustrated), and the case is closed. Thus, the power storage device 10 including the positive electrode layer 11, the electrolyte layer 14, and the negative electrode layer 15 in that order can be fabricated. Needless to say, it is a possible case that at least one member of the positive electrode layer 11, the electrolyte layer 14, and the negative electrode layer 15 does not contain at least one of the electrolytic solution and the binder.

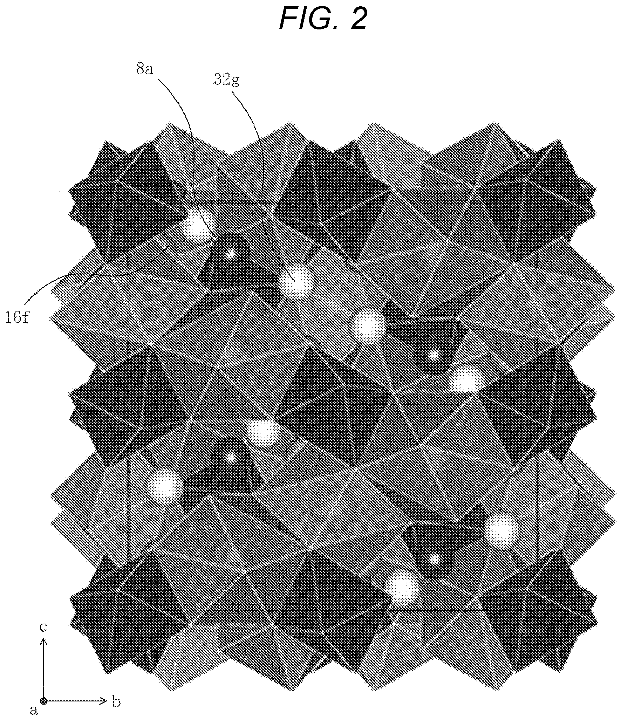

Next, the crystal structure of the oxide 18 will be described, based on the comparison of the crystal structure of existing tetragonal Li₇La₃Zr₂O₁₂ (LLZ) with that of the oxide 18 of the present embodiment. FIG. 2 is a schematic view of the crystal structure of existing tetragonal LLZ focusing on eight unit lattices in one formula unit. A tetragonal crystal refers to a crystal in which, among the three ridgelines being orthogonal to one another in a unit lattice, the lengths (a, b) of the two ridgelines are equivalent, and the length c of the other ridgeline is different from a or b. In the existing tetragonal LLZ, Li is present in three types of ion sites; i.e., 8a sites, 16f sites, and 32g sites. The 8a sites are arranged in a tetrahedral coordination geometry, and the 16f sites and the 32g sites are arranged in an octahedral coordination geometry, respectively. The percent Li occupancy of each of the 8a sites, 16f sites, and 32g sites is substantially 100%.

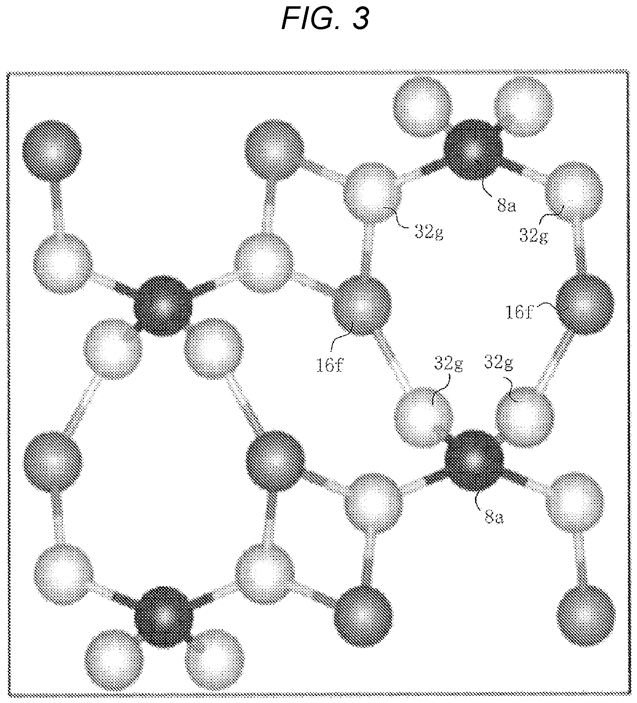

FIG. 3 is a schematic view of the Li coordination feature in one crystal plane of existing tetragonal LLZ. Li present in the 8a ion sites is simultaneously present also at intersections of ion conduction paths. In the Li ion conduction paths, Li nodes present in the 16f ion sites and the 32g ion sites are arranged between Li nodes present in the 8a ion sites. Since the percent Li occupancy of the 8a sites is almost 100%, substantially no pores are present at the intersections of ion conduction paths. Thus, the ion-conductive property, which is attributed to transfer of Li ions to pores of existing tetragonal LLZ, is low. The ion conductivity of the existing tetragonal LLZ is generally an order of 10⁻⁶ S/cm at room temperature.

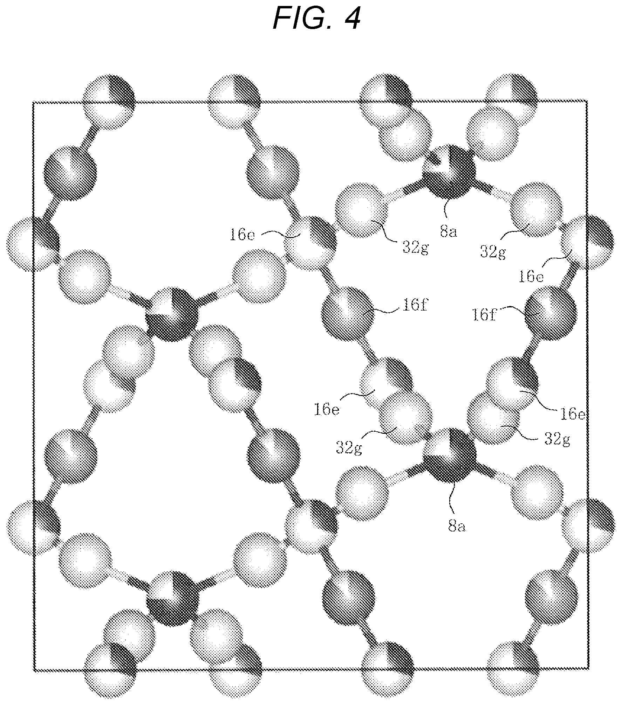

FIG. 4 is a schematic view of the Li coordination feature in one crystal plane of the oxide 18 (tetragonal LLZ). The crystal structure of the oxide 18 belongs to a space group I4₁/acd. In the oxide 18, Li is present in four types of ion sites; i.e., 8a sites, 16f sites, 32g sites, and 16e sites. Li present in the 8a ion sites and 16e ion sites is simultaneously present at intersections of ion conduction paths. In the Li ion conduction paths, Li nodes present in the 16f ion sites, 32g ion sites, and 16e ion sites are arranged between Li nodes present in the 8a ion sites. The 8a sites and 16e sites are arranged in a tetrahedral coordination geometry, and the 16f sites and the 32g sites are arranged in an octahedral coordination geometry, respectively. The ion conductivity of the oxide 18 at room temperature is generally an order of 10⁻⁴ S/cm or higher, which is 100 times or greater the ion conductivity of existing tetragonal LLZ at room temperature.

The oxide 18 includes at least two tetragonal phases having different lattice constants. Among two tetragonal phases, a tetragonal phase having a greater lattice constant ratio (a/c) is referred to as a "first phase," and a tetragonal phase having a smaller lattice constant ratio (a/c) is referred to as a "second phase." For example, the a/c of the first phase falls within a range of 1.003 to 1.03, inclusive, and the a/c of the second phase falls within a range of 1.001 to 1.01, inclusive.

In the oxide 18, the percent Li occupancy of the 8a sites of the first phase is greater than that of the 8a sites of the second phase. The percent Li occupancy in a tetrahedral coordination geometry consisting of the 8a sites and the 16e sites in the first phase is higher than the percent Li occupancy in a tetrahedral coordination geometry consisting of the 8a sites and the 16e sites in the second phase.

Conceivably, the second phase in which the percent Li occupancy in a tetrahedral coordination geometry consisting of the 8a ion sites and the 16e ion sites is relatively low is mainly involved in Li ion conduction, while the first phase in which the percent Li occupancy in a tetrahedral coordination geometry consisting of the 8a ion sites and the 16e ion sites is relatively high is mainly involved in Li ion supply. Thus, such a high ion-conductive property is conceivably attributed to a complementary relationship between the first phase and the second phase.

The percent Li occupancy of the 8a sites of the second phase is preferably 30% or higher and 95% or lower. When the percent Li occupancy is 95% or less, probability of existence of pores at intersections of ion conduction paths increases, whereby the ion-conductive property attributed to transfer of Li ions to such pores increases. In contrast, when the percent Li occupancy is 30% or higher, electrical repulsion between pores is suppressed, whereby Li ion mobility can be secured. The percent Li occupancy of the 8a sites is more preferably 50% or higher. When the percent Li occupancy is lower than 50%, pores increase, and electrical repulsion between pores causes to reduce Li ion mobility. In this case, the ion-conductive property tends to decrease.

The 16e site is an ion site in which the energy level is highly variable depending on variation in composition. Thus, when the 16e sites are stabilized, Li transfers from other ion sites to the 16e sites, thereby achieving high percent Li occupancy of the 16e sites. The percent Li occupancy of the 16e sites in the first phase and that in the second phase are preferably 60% or lower (hereinafter, excluding 0%). When the percent Li occupancy is in excess of 60%, Li ion mobility decreases due to electrostatic repulsion with adjacent Li ions. The percent Li occupancy of the 16e sites is preferably 20% or higher. When the percent Li occupancy of the 16e sites is lower than 20%, the stability of the 16e sites is poor. In such a case, Li ion conduction by the mediation of the 16e sites is impeded, resulting in a drop in ion-conductive property.

Li present in the 16f sites and the 32g sites sustains the crystal structure and also secures a carrier concentration. The first phase and the second phase each preferably have a percent Li occupancy of the 16f sites and the 32g sites, respectively, of 50% or higher (including 100%), more preferably 75% or higher. When the percent Li occupancy of the 16f sites or the 32g sites is lower than 75%, generally, carrier concentration decreases, resulting in a drop in ion conductivity. When the percent Li occupancy is lower than 50%, generally, the presence of a series of continuous pores evokes electrostatic repulsion, resulting in collapse of the crystal structure.

The lattice constants as well as the percent Li occupancy of the relevant ion sites in the first phase and the second phase are determined by obtaining a powder neutron ray diffraction profile, and analyzing the diffraction profile through the Rietveld method. In the analyses through powder neutron ray diffraction and the Rietveld method, the lattice plane intervals d in a relevant crystal phase fall within 0.5 to 4.7Å. In the analysis through the Rietveld method, data of the powder neutron ray diffraction with a resolution Δd/d of 0.16% or less are employed. The analysis through the Rietveld method is based on the following prerequisites: a crystal structure belonging to a space group I4₁/acd; two tetragonal phases having different lattice constants; and possibility of the presence of Li in the 8a sites, 16f sites, 32g sites, and 16e sites.

Even when an actual analysis through powder neutron ray diffraction or the Rietveld method is not conducted, the presence of two tetragonal phases having different lattice constants in the oxide 18 can be estimated in a simple manner on the basis of powder X-ray diffraction and the Rietveld method. One characteristic feature of a tetragonal phase is that a Bragg reflection attributed to a (800)-plane in an X-ray diffraction chart assumes two split peaks due to difference in inter-plane intervals. Conceivably, in the case of the oxide 18, a Bragg reflection attributed to a (800)-plane in an X-ray diffraction chart assumes three split peaks, indicating that peaks attributed to two or more overlapping crystal phases.

Whether or not the oxide 18 includes two tetragonal crystals can be estimated by determining lattice constants through the Rietveld method, assuming that two tetragonal phases each belong to a space group I4₁/acd and have a lattice constant ratio of a>c. When the lattice constant ratio a/c of each of the two assumed tetragonal crystal phases converges to a value greater than 1.001, the oxide 18 can be estimated to include two tetragonal phases having different lattice constants.

The crystal structure of the oxide 18 is a tetragonal crystal system having lattice constants similar to those of a cubic crystal system. Thus, the difference in value between a and c is subtle. Therefore, in the case where lattice constants are determined through powder X-ray diffraction, a powder X-ray diffractometer having high angle resolution must be employed. The light source employed in the powder X-ray diffractometer is preferably synchrotron radiation. A standard value of the angle resolution is such that the half width of a Bragg reflection attributed to a (110)-plane obtained by measuring a standard sample LaB₆ (NIST SRM660c) at a wavelength of 0.85Å is required to be 0.030° or less.

Examples of the oxide 18 include Li₇La₃Zr₂O₁₂ (LLZ) in which a component element has been partially substituted by another element, and Li₇La₃Zr₂O₁₂ (LLZ) to which a micro-amount of another element has been added not in a manner of substitution of a component element. Examples of the additional element (i.e., another element) include at least one element selected from the group consisting of Mg, Al, Si, Ca, Ti, V, Ga, Sr, Y, Nb, Sn, Sb, Ba, Hf, Ta, W, Bi, Rb, and lanthanoids (excluding La). The additional element is preferably at least one of Mg and Sr, particularly preferably Sr.

Sr and La, having ionic radii almost equivalent to each other, are elements which are easy to undergo substitution by La of LLZ. When Sr enters La sites, Li concentration around Sr increases due to variation in valence of these elements, whereby stability of the 16e sites can be enhanced. When an appropriate amount of substituted Sr is achieved, the ion-conductive property of the oxide 18 can be enhanced.

Mg and Li are elements that can form a composite oxide. In production of LLZ, raw materials are mixed so as to achieve an excess of Li, in consideration of volatilization of Li during firing. Once Mg is added to the raw materials, when volatilization of an excess amount of Li is insufficient during firing, remaining Li and Mg form a composite oxide. Thus, an interfacial resistant layer (e.g., lithium carbonate), which would otherwise be formed by excess Li, can be avoided, whereby the ion-conductive property of the oxide 18 can be enhanced.

The oxide 18 can be produced from starting materials; a compound containing Li, a compound containing La, a compound containing Zr, and a compound containing an optional element (e.g., Mg or Sr) and by weighing and mixing the starting materials so as to attain a chemical composition of interest and firing the mixture. The oxide 18 is a polycrystalline substance. The electrolyte layer 14 can be formed of a sintered body containing the oxide 18. A powder of the oxide 18 obtained by pulverizing the sintered body may be placed in the electrolyte layer 14 or the active material layer 13 or 17.

The electrolyte layer 14 or the active material layer 13 or 17 may further contain, in addition to the oxide 18, one or more additional solid electrolytes. Examples of such additional solid electrolytes include crystalline or amorphous oxide-type solid electrolytes (e.g., perovskite-type, NASICON-type, and LISICON-type), and hydride-type solid electrolytes.

Examples of the perovskite-type solid electrolyte include an oxide containing at least, Li, Ti, and La (e.g., La_{2/3-X}Li_{3X}TiO₃). Examples of the NASICON-type solid electrolyte include an oxide containing at least Li, M (M represents at least one element selected from Ti, Zr, and Ge), and P (e.g., Li(Al,Ti)₂(PO₄)₃ or Li(Al,Ge)₂(PO₄)₃). Examples of the LISICON-type solid electrolyte include Li₁₄Zn(GeO₄)₄. Examples of the hydride-type solid electrolyte include an alkali metal or alkaline earth metal hydride containing at least one element of Group 13 elements (e.g., B, Al, Ga, In, and Ta) of the 18-group periodic table. Specific examples include LiBH₄ and LiAlH₄.

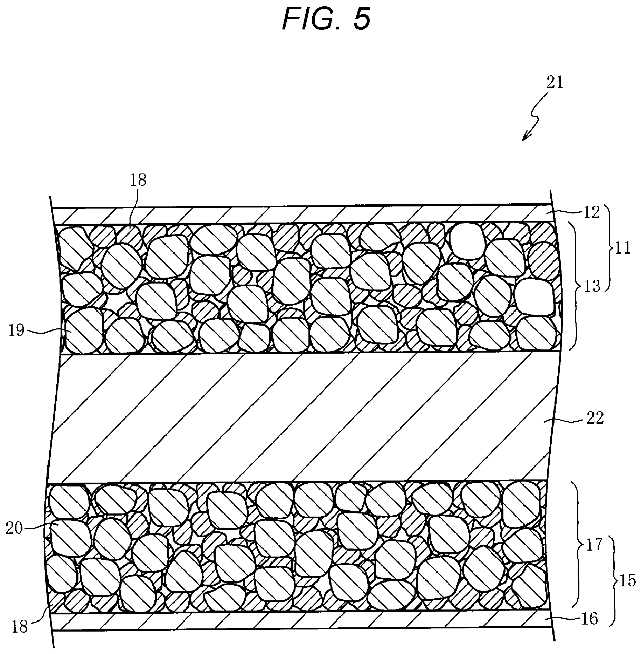

With reference to FIG. 5, a second embodiment will be described. In the first embodiment, there has been described the case where the oxide 18 is employed in a secondary battery including a power-generating element formed of a solid. In the second embodiment, there will be described a case where the oxide 18 is employed in a liquid-type lithium ion battery including an organic solvent in an electrolyte. The same members as employed in the first embodiment are denoted by the same reference numbers, and further descriptions thereof will be omitted. FIG. 5 is a cross-sectional view of a power storage device 21 according to the second embodiment.

The power storage device 21 includes a positive electrode layer 11, a separator 22, and a negative electrode layer 15 in that order. These elements are built in a case (not illustrated). The separator 22 is resistive to the active materials 19 and 20 contained in the positive electrode layer 11 and the negative electrode layer 15, and to an electrolytic solution and is formed of a porous body which allows passage of lithium ions but has no electron conductivity. Examples of the separator 22 include non-woven fabric or porous film formed of cellulose, polypropylene, polyethylene, etc.

Since the power storage device 21 of the second embodiment contains the oxide 18 in the positive electrode layer 11 and the negative electrode layer 15, the oxide 18 can be produced though a simple method, similar to the case of the power storage device 11 of the first embodiment.

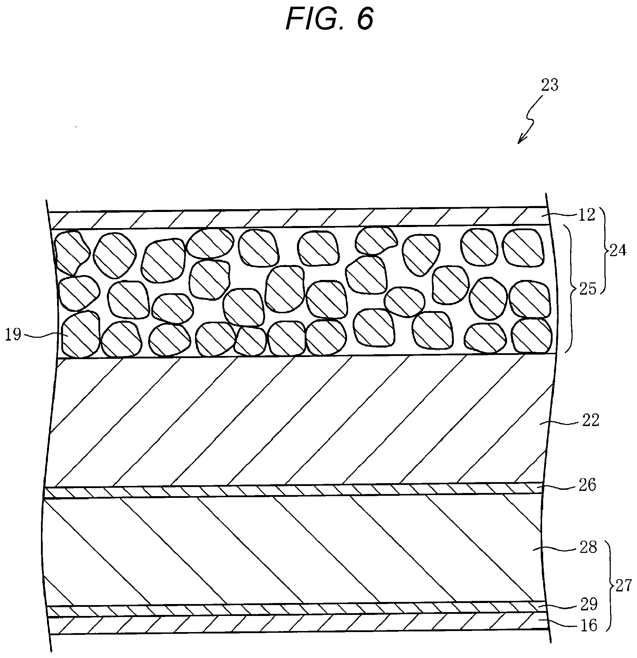

With reference to FIG. 6, a third embodiment will be described. In the first or second embodiment, there has been described the case where the oxide 18 is employed in the positive electrode layer 11, the electrolyte layer 14, and the negative electrode layer 15. In the third embodiment, there will be described a case where the oxide 18 is employed in the protective layers 26, 29. The same members as employed in the first and second embodiments are denoted by the same reference numbers, and further descriptions thereof will be omitted. FIG. 6 is a cross-sectional view of a power storage device 23 according to the third embodiment.

The power storage device 23 includes, from top to bottom, a positive electrode layer 24, a separator 22, and a negative electrode layer 27. These components are built in a case (not illustrated). The power storage device 23 is a liquid-type lithium ion battery containing an organic solvent in the electrolyte.

The positive electrode layer 24 includes a current-collecting layer 12 and an active material layer 25 stacked thereon. The active material layer 25 contains an active material 19. For lowering the resistance of the active material layer 25, the active material layer 25 may contain a conducting aid such as carbon black, acetylene black, Ketjen black, carbon fiber, Ni, Pt, or Ag.

Between the separator 22 and the negative electrode layer 27, a protective layer 26 is disposed. The protective layer 26 contains the oxide 18.

The negative electrode layer 27 is formed of an active material layer 28, the protective layer 29, and the current-collecting layer 16 stacked in that order. The active material layer 28 is formed of a material, for example, Li, Li-Al alloy, Li-Sn alloy, Li-Si alloy, Li-Mg alloy, Li-Si alloy, or Si-Li alloy. The protective layer 29 contains the oxide 18. The protective layers 26, 29 are disposed through sheet stacking, application to the separator 22 or the current-collecting layer 16, or a similar technique.

The metal oxide 18, which has a garnet-type crystal structure including Li, La, and Zr, has resistance to reduction by metallic lithium present in the active material layer 28. As a result, stability in operation of the power storage device 23 increases. In addition, the protective layer 26 intervening between the active material layer 28 and the separator 22 suppresses short circuit, which would otherwise be caused by dendritic growth of metallic lithium. The protective layer 29 intervening between the active material layer 28 and the current-collecting layer 16 suppresses degradation of the current-collecting layer 16.

### EXAMPLES

The present invention will next be described in detail by way of examples, which should not be construed as limiting the invention thereto.

### (Preparation of oxide)

Li₂CO₃, La(OH)₃, and ZrO₂, and optionally SrCO₃ and MgO were weighed so as to establish various theoretical compositional formulas shown in Tables 1 and 2. The amount of Li₂CO₃ was adjusted to an about 15 mol%-excess (as reduced to elemental Li), in consideration of sublimation of Li during firing. The thus-weighed raw materials, an organic solvent, and zirconia balls were fed to a nylon-made pot, and the mixture was pulverized and mixed by means of a ball mill for 15 hours. The resultant slurry was removed from the pot and dried. The dry product was fired on an MgO plate at 900°C for 1 hour, and further fired on an MgO plate at 1,200°C for 15 hours.

A binder was added to the powder obtained through firing, and the mixture was pulverized and mixed in an organic solvent by means of a ball mill for 15 hours. The resultant slurry was removed from a pot and dried, to thereby yield a powder. The thus-obtained powder was press-formed into disk-like pellets (diameter: 12 mm, thickness: about 1.5 mm). Through cold isostatic pressing (CIP), the pellets were pressed at a hydrostatic pressure of 1.5 t/cm², to thereby form a compact. Subsequently, a compact was placed on a powder having the same composition as that of the compact, and firing was conducted in an inert gas atmosphere at 1,050°C or higher over 3 to 36 hours. Then the temperature was lowered at a cooling rate of 10°C/minute, to thereby yield various oxide sintered bodies having different compositions.

### (Measurement of ion conductivity)

To each of the thus-obtained sintered body, a current-collecting member was tightly attached to each surface, to thereby provide a symmetric cell. By use of the cell, the ion conductivity of the sintered body was measured at 25°C through the AC impedance method.

### (Determination of crystal structure and percent occupancy of ion sites)

Each of the sintered bodies was wet-pulverized by means of a planetary mill in a glove box filled with argon, and the powder was dried, to thereby prepare various oxide powders. A diffraction profile of each oxide was obtained by means of a powder neutron ray diffractometer. Neutron ray diffractometry was performed by means of BL20 in a megaintensity proton accelerator facility J-PARC under the following conditions: output of 700kW, double frame (DF), and measuring time of 20 minutes.

A diffraction profile obtained through a backward detector bank (d: 0.181 to 5.09Å, resolution Δd/d: 0.15%) was analyzed through the Rietveld method at a d range of 0.5 to 4.7Å, whereby the first phase content, the second phase content, lattice constants (Å) in the first phase and the second phase, and percent Li occupancy values of respective ion sites (%) in the first phase and the second phase were determined. The analysis through the Rietveld method was conducted by analysis software "Z-Rietveld" and the following prerequisites: crystal structure belonging to a space group I4₁/acd (tetragonal); presence of two tetragonal phases (first phase and second phase) having different lattice constants; possibility of the presence of Li in the 8a sites, 16f sites, 32g sites, and 16e sites; site occupancy of each of La, Zr, and O being 1; and maximum percent Li site occupancy being 1. A validity index of Rwp<15, S<3.0 was employed.

Table 1 shows theoretical compositional formulas of the prepared oxides, first phase content (mass%), lattice constants (Å) of the first phase, and percent Li occupancy values (%) of the ion sites of 8a sites, 16f sites, 32g sites, and 16e sites in the first phase. Table 2 shows theoretical compositional formulas of the prepared oxides, second phase content (mass%), lattice constants (Å) of the second phase, percent Li occupancy values (%) in the ion sites of 8a sites, 16f sites, 32g sites, and 16e sites in the second phase, and ion conductivity (S/cm).

Examples 3 and 4 had the same theoretical compositional formula of oxide. Regarding the oxide of Example 4, the first phase content, the second phase content, the lattice constants, and the percent Li occupancy were determined, but ion conductivity was not measured. An ion conductivity of 1.0×10⁻³ S/cm or higher was assessed as score "A." An ion conductivity of 1.0×10⁻⁴ S/cm or higher and lower than 1.0×10⁻³ S/cm was assessed as score "B." An ion conductivity lower than 1.0×10⁻⁴ S/cm was assessed as score "C."

**[Table 1]**

| | Theoretical compositional formula | First phase | | | | | |
|---|---|---|---|---|---|---|---|
| | | Content (mass%) | Lattice constants (Å) | % Li occupancy of ion sites (%) | | | |
| | | | | 32g | 16f | 8a | 16e |
| Ex. 1 | Li_{7.25}L_{a2.75}Sr_{0.25}Zr₂O₁₂ | 70 | a=b=12.994, c=12.885 | 95.8 | 85.2 | 87.9 | 43.6 |
| Ex. 2 | Li_{7.30}La_{2.75}Sr_{0.30}Zr₂O₁₂ | 51 | a=b=12.992, c=12.905 | 94.1 | 89.5 | 86.7 | 43.9 |
| Ex. 3 | Li_{6.95}Mg_{0.1 5}La_{2.75} Sr_{0.25}Zr₂O₁₂ | 63 | a=b=12.990, c=12.893 | 96.7 | 81.7 | 85.1 | 44.5 |
| Ex. 4 | | 51 | a=b=13.031, c=12.880 | 93.9 | 82.0 | 95.2 | 36.9 |
| Ex. 5 | Li_{6.75}Mg_{0.25}La_{2.75}Sr_{0.25}Zr₂O₁₂ | 57 | a=b=12.985, c=12.903 | 92.5 | 86.0 | 83.7 | 46.3 |
| Comp. Ex. 1 | Li₇La₃Zr₂O₁₂ | 100 | a=b=13.124, c=12.661 | 100.0 | 100.0 | 100.0 | 0.0 |
| Comp. Ex. 2 | Li_{7.4}La_{2.6}Sr_{0.4}Zr₂O₁₂ | 100 | a=b=c=12.960 | - | - | - | - |
| Comp. Ex. 3 | Li_{6.7}Mg_{0.15}La₃Zr₂O₁₂ | 100 | a=b=13.111, c=12.651 | 100.0 | 100.0 | 97.7 | 0.0 |
| Comp. Ex. 4 | Li_{6.55}Mg_{0.35}La_{2.75}SrO_{0.25}Zr₂O₁₂ | 100 | a=b=c=12.957 | - | - | - | - |

**[Table 2]**

| | Theoretical compositional formula | Second phase | | | | | | Ion conductivity (S/cm) | Score |
|---|---|---|---|---|---|---|---|---|---|
| | | Content (mass%) | Lattice constants (Å) | % Li occupancy of ion sites (%) | | | | | |
| | | | | 32g | 16f | 8a | 16e | | |
| Ex. 1 | Li_{7.25}La_{2.75}Sr_{0.25}Zr₂O₁₂ | 30 | a=b=12.968 , c=12.927 | 100. 0 | 100. 0 | 66.3 | 48.7 | 7.75×10⁻⁴ | B |
| Ex. 2 | Li_{7.30}La_{2.75}Sr_{0.30}Zr₂O₁₂ | 49 | a=b=12.967 , c=12.946 | 99.4 | 97.3 | 59.7 | 48.5 | 4.57×10⁻⁴ | B |
| Ex. 3 | Li_{6.95}Mg_{0.15}La_{2.75}Sr_{0.25}Zr₂O₁₂ | 37 | a=b=12.968 , c=12.936 | 98.6 | 92.8 | 65.1 | 46.3 | 1.39×10⁻³ | A |
| Ex. 4 | | 49 | a=b=12.969 , c=12.954 | 97.3 | 96.0 | 59.8 | 40.7 | - | |
| Ex. 5 | Li_{6.75}Mg_{0.25}La_{2.75}Sr_{0.25}Zr₂O₁₂ | 43 | a=b=12.968 , c=12.937 | 93.8 | 92.3 | 66.2 | 47.9 | 1.14×10⁻³ | A |
| Comp. 1 | Li₇La₃Zr₂O₁₂ | 0 | - | - | - | - | - | 1.31×10⁻⁶ | C |
| Comp. 2 | Li_{7.4}La_{2.6}Sr_{0.4}Zr₂O₁₂ | 0 | - | - | - | - | - | 6.72×10⁻⁵ | C |
| Comp. 3 | Li_{6.7}Mg_{0.15}La₃Zr₂O₁₂ | 0 | - | - | - | - | - | 1.31×10⁻⁶ | C |
| Comp. 4 | Li_{6.55}Mg_{0.35}La_{2.75}Sr_{0.25}Zr₂O₁₂ | 0 | - | - | - | - | - | 674×10⁻⁵ | C |

As shown in Table 1, the oxides of Comparative Examples 2 and 4 were found to have a cubic crystal structure having lattice constants a, b, and c equivalent to one another. The oxides of Comparative Examples 1 and 3 were found to singly have a tetragonal (space group I4₁/acd) crystal structure in which lattice constants a and b were equivalent to each other and a lattice constant c was shorter than a lattice constant a, and to have no two tetragonal phases having different lattice constants. As shown in Table 2, ion conductivity in any of Comparative Examples 1 to 4 was assessed as "C."

The oxides of Examples 1 to 5 were found to have a crystal structure including two tetragonal phases (first phase and second phase) having different lattice constants. In the Examples, the first phase content (mass%) was greater than the second phase content (mass%), and the lattice constant ratio a/c of the first phase was greater than that of the second phase.

In the Examples, the percent Li occupancy of the 8a sites in the first phase was greater than the percent Li occupancy of the 8a sites in the second phase. The percent Li occupancy of a tetrahedral coordination sites consisting of the 8a sites and the 16e sites in the first phase was greater than the percent Li occupancy of a tetrahedral coordination sites consisting of the 8a sites and the 16e sites in the second phase. In Examples 1 to 5, the percent Li occupancy of the 8a sites in the second phase was 30% or more and 95% or less, and the percent Li occupancy of the 16e sites in any of the first phase and the second phase was 60% or less (excluding 0%).

In Examples 1 to 5, ion conductivity was assessed as A or B. Thus, the oxide including two tetragonal phases (first phase and second phase) having different lattice constants was found to exhibit a high ion conductivity of 1.0×10⁻⁴ S/cm or higher.

In Examples 1 to 5, oxide sintered bodies were produced by placing a compact on a powder having the same composition as that of the compact, conducting firing, and lowering the temperature at a cooling rate of 10°C/minute. In contrast, related art involves a cumbersome operation such as covering a compact with a powder having the same composition as that of the compact during firing. Thus, according to the present invention not including such a cumbersome operation has been proven to yield an oxide exhibiting high ion-conductive property in a simple method.

The present invention has been described in detail by way of the embodiments. However, the present invention is not limited to the above embodiments. It can be easily inferred that those skilled in the art can easily conceive various improvements and modifications, so long as they fall within the scope of the present invention.

In the above embodiments, the power storage device 10 has the positive electrode layer 11 in which the active material layer 13 is provided on one surface of the current-collecting layer 12, and the negative electrode layer 15 in which the active material layer 17 is provided on one surface of the current-collecting layer 16. However, the present invention is not necessarily limited thereto. It should be apparent for those skilled in the art that the elements of the above embodiment can be applied to, for example, a power storage device which includes an electrode layer having the current-collecting layer 12 provided with the active material layer 13 and the active material layer 17 on each surface (i.e., a so-called bipolar electrode). By alternatingly stacking the bipolar electrode and the electrolyte layer 14, and inserting the stacked product into a case (not illustrated), a so-called power storage device of a bipolar structure can be obtained.

The above embodiments correspond to the case in which each of the active material layers 13, 17 and the electrolyte layer 14 contains the oxide 18. However, the present invention is not necessarily limited thereto. In the power storage device, at least one member of the active material layers 13, 17 and the electrolyte layer 14 essentially contains the oxide 18.

The third embodiment corresponds to the case in which the protective layer 26 is disposed between the active material layer 28 and the separator 22, and the protective layer 29 is disposed between the current-collecting layer 16 and the active material layer 28. However, the present invention is not necessarily limited thereto. Needless to say, either of the protective layers 26 and 29 may be omitted.

In the above-described embodiments, the oxide 18 has been described in detail, taking the power storage devices 10, 21, and 23 formed of a lithium ion battery as examples. However, the present invention is not necessarily limited thereto. Examples of other power storage devices containing the oxide 18 include an electrochemical capacitor employing electrode redox reaction, redox reaction of ions in electrolytic solution, or electric double layer; and a metal-air battery employing oxygen in air as a positive electrode active material.

### REFERENCE SIGNS LIST

10, 22, 23: power storage device
11, 24: positive electrode layer (electrode layer)
12, 16: current-collecting layer
13, 17: active material layer (electrolyte composition)
14: electrolyte layer (electrolyte composition, separator)
15, 27: negative electrode layer (electrode layer)
18: oxide
22: separator
26, 29: protective layer

## Claims

1. An oxide which has a garnet-type crystal structure including Li, La, and Zr, wherein
the crystal structure includes at least two tetragonal phases having different lattice constants.

2. The oxide according to claim 1, wherein
the crystal structure belongs to a space group I4₁/acd, and
at least one of the tetragonal phases has a percent Li occupancy of 8a sites of 95% or less.

3. The oxide according to claim 1 or 2, which further contains Sr.

4. An electrolyte composition comprising an oxide as recited in claim 1 or 2.

5. A power storage device which has a plurality of electrode layers and a separator isolating the plurality of electrode layers, wherein
at least one of the plurality of electrode layers and the separator contains an oxide as recited in claim 1 or 2.

6. A power storage device which has a plurality of electrode layers including a current-collecting layer, and a separator isolating the plurality of electrode layers, wherein
the power storage device has a protective layer provided between any of the electrode layers and the separator or on the current-collecting layer, and
the protective layer contains an oxide as recited in claim 1 or 2.
